# EUROPEAN PATENT SPECIFICATION

(11) **EP 4 279 987 B1**
(45) Date of publication and mention of the grant of the patent: **21.10.2026**
(21) Application number: 22738951.7
(22) Date of filing: 10.01.2022
(51) Int. Cl.: G02F 1/155, G02F 1/153, G02F 1/163, G02F 1/1333, B32B 17/10, E06B 3/67, E06B 9/24, B60J 3/04

(54) **ELECTROCHROMIC DEVICE AND CONTROL METHOD FOR SAME**
ELEKTROCHROME VORRICHTUNG UND STEUERUNGSVERFAHREN DAFÜR
DISPOSITIF ÉLECTROCHROMIQUE ET SON PROCÉDÉ DE COMMANDE

(30) Priority: 13.01.2021 CN 202110042216
(43) Date of publication of application: 22.11.2023
(73) Proprietor: Guangyi Intelligent Tech (Suzhou) Co., Ltd, Suzhou, Jiangsu 215151 (CN)
(72) Inventor: XIONG, Chenbi, Suzhou, Jiangsu 215151 (CN)
(74) Representative: Ricker, Mathias
(86) International application number: PCT/CN2022/070945
(87) International publication number: WO 2022/152070

(56) References cited:
- CN-A- 108 490 712
- CN-A- 108 490 712
- CN-A- 109 597 260
- CN-A- 111 897 172
- CN-A- 112 782 899
- CN-U- 214 375 727
- JP-A- 2019 158 940
- US-A1- 2019 101 805

## Description

### TECHNICAL FIELD

The present application relates to the field of electrochromic technology, for example, an electrochromic device and a method for controlling an electrochromic device.

### BACKGROUND

An electrochromic device is a device that can respond to an external potential difference to change the optical performance of the electrochromic device. The variation in its optical performance is mainly caused by the ion insertion/desorption of an electrochromic material in the electrochromic device. In the related art, the optical performance of an electrochromic device is usually switched between a coloration state and a decoloration state (transparent state). For example, when applied, the electrochromic device may be combined into a window to form an electrochromic window. When strong ambient light exists, a user may switch the optical state of the window to the coloration state (such as gray or blue), thereby weakening the light ray intensity to a certain extent, and improving body comfort. When the ambient light intensity is relatively weak, the user may switch the optical state of the window to the decoloration state, increasing the ratio of incident light intensity so as to increase indoor brightness.

However, with the width of the electrochromic device increasing gradually, since a conductive layer used by the electrochromic device has a surface resistance, an effective voltage on the surface of the electrochromic device may be caused to be nonuniform. That is, the effective voltage on the periphery is greater than the effective voltage in the center. Therefore, when the electrochromic device changes color, the periphery changes color fast, while the center changes color slowly. Moreover, the larger the width of the electrochromic device, the more obvious the nonuniformity of color changing and the longer the time required by the center for reaching the end point of color changing.

The CN 108,490,712 A discloses an an inorganic full-solid-state electrochromic device with quick responsiveness and a preparation method thereof. The device comprises a substrate, a bottom protection layer, bottom conductor layers, color change layers, conduction layers, storage layers and top conductor layers, wherein the bottom protection layer, the bottom conductor layers, the color change layers, the conduction layer, the storage layers and the top conductor layers are arranged on the substrate in sequence; the inorganic full-solid-state electrochromic device is provided with multiple cavity slots, the cavity slots run through the bottom conductor layers from the top conductor layers, and each top conductor layer is divided into multiple units; each unit of each top conductor layer is independently provided with an electrode, middle electrodes are arranged on the portions, corresponding to one or more cavity slots, on the bottom conductor layers, and each unit of each top conductor layer andthe corresponding bottom conductor layer form an electric field; the top conductor layers and the bottom conductor layers have no short circuit.

US 2019/101805 A1 discloses an electrochemical optical device.

### SUMMARY

The present application provides an electrochromic device and a method for controlling an electrochromic device to solve the issue of the low color changing speed in the center of a large-width electrochromic device and the nonuniform color changing of the whole.

The invention is set out in the appended claims.

### BRIEF DESCRIPTION OF DRAWINGS

FIG. 1 is a structural diagram of an electrochromic device according to an embodiment of the present application.
FIG. 2 is a structural diagram of another electrochromic device according to an embodiment of the present application.
FIG. 3 is a structural diagram of another electrochromic device according to an embodiment of the present application.
FIG. 4 is a structural diagram of another electrochromic device according to an embodiment of the present application.
FIG. 5 is a structural diagram of another electrochromic device according to an embodiment of the present application.
FIG. 6 is a structural diagram of another electrochromic device according to an embodiment of the present application.
FIG. 7 is a structural diagram of another electrochromic device according to an embodiment of the present application.
FIG. 8 is a structural diagram of another electrochromic device according to an embodiment of the present application.
FIG. 9 is a structural diagram of another electrochromic device according to an embodiment of the present application.
FIG. 10 is a flowchart of a method for controlling an electrochromic device according to an embodiment of the present application.

### DETAILED DESCRIPTION

The present application is described below in conjunction with drawings and embodiments. Specific embodiments described herein are merely intended to explain the present application. For ease of description, only part related to the present application is illustrated in the drawings.

Additionally, the terms "first", "second" and the like may be used herein to describe multiple directions, actions, steps, elements or the like, but these directions, actions, steps or elements are not limited by these terms. These terms are only used for distinguishing one direction, action, step or element from another direction, action, step or element. Terms like "first", "second" and the like are not to be construed as indicating or implying relative importance or implicitly indicating the number of technical features as indicated. Thus a feature defined as a "first" feature or a "second" feature may explicitly or implicitly include one or more of such features.

Before the example embodiments are discussed, it is to be noted that some of the example embodiments are described as processing or methods depicted in flowcharts. Although multiple steps are described as sequential processing in the flowcharts, many of the steps may be implemented concurrently, coincidentally or simultaneously. Additionally, the sequence of the multiple steps may be rearranged. The processing may be terminated when the operations are completed, but the processing may further have additional steps that are not included in the drawings. The processing may correspond to a method, a function, a procedure, a subroutine, a subprogram or the like.

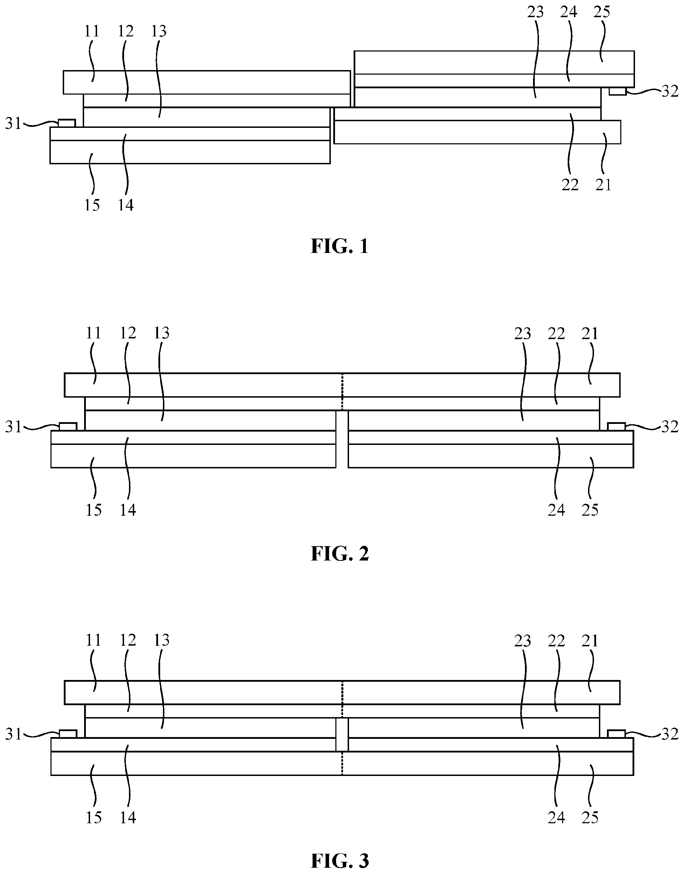

FIG. 1 is a structural diagram of an electrochromic device according to an embodiment of the present application. As shown in FIG. 1, the electrochromic device includes at least two electrochromic regions (FIG. 1 illustrates an example in which two electrochromic regions are included). For each two adjacent electrochromic regions, including a first electrochromic region and a second electrochromic region, the first electrochromic region includes a first base layer 11, a first conductive layer 12, a first electrochromic layer 13, a second conductive layer 14, and a second base layer 15 that are stacked in sequence. The second electrochromic region includes a third base layer 21, a third conductive layer 22, a second electrochromic layer 23, a fourth conductive layer 24, and a fourth base layer 25 that are stacked in sequence. The first conductive layer 12 is electrically connected to the third conductive layer 22. The second conductive layer 14 is not in contact with the fourth conductive layer 24. The edge of the first electrochromic layer 13 is insulated from the edge of the second electrochromic layer 23. If the first electrochromic region is located at the periphery of the electrochromic device, a first lead-out electrode 31 is electrically connected to the second conductive layer 14. If the second electrochromic region is located at the periphery of the electrochromic device, a second lead-out electrode 32 is electrically connected to the fourth conductive layer 24.

The example in which the electrochromic device includes two electrochromic regions is taken for description. The first electrochromic region and the second electrochromic region are connected in series through the electrical connection between the first conductive layer 12 and the third conductive layer 22 and the non-contact between the second conductive layer 14 and the fourth conductive layer 24. The edge of the first electrochromic layer 13 is a surface that is not in contact with the first conductive layer 12 and the second conductive layer 14. The edge of the second electrochromic layer 23 is a surface that is not in contact with the third conductive layer 22 and the fourth conductive layer 24. The case where the edge of the first electrochromic layer 13 is insulated from the edge of the second electrochromic layer 23 includes the following: A gap of a preset width is disposed between the edge of the first electrochromic layer 13 and the edge of the second electrochromic layer 23, which is not in accordance with the claimed subjectmatter, or an electronic insulating material is disposed between the edge of the first electrochromic layer 13 and the edge of the second electrochromic layer 23. Exemplarily, the electronic insulating material may be, for example, an insulating colloid, an ionic conduction layer material, and the like. As shown in FIG. 1, the first base layer 11 and the fourth base layer 25 are separated structures, and the second base layer 15 and the third base layer 21 are separated structures. In another optional embodiment, on the basis of the structure shown in FIG. 1, the first base layer 11 and the fourth base layer 25 may be arranged as an integrally connected structure, and/or the second base layer 15 and the third base layer 21 may be arranged as an integrally connected structure. The arrangement in which the edge of the first electrochromic layer 13 is insulated from the edge of the second electrochromic layer 23 can effectively avoid a short circuit inside the electrochromic device. Optionally, one or at least two of the first conductive layer 12, the second conductive layer 14, the third conductive layer 22 and the fourth conductive layer 24 may be each a monolayer conductive layer with a uniform surface resistance, or a monolayer conductive layer with a nonuniform surface resistance, or a multilayer conductive layer stacked by multiple conductive materials with different electrical resistivity. In this case, the first lead-out electrode 31 is electrically connected to the second conductive layer 14, and the second lead-out electrode 32 is electrically connected to the fourth conductive layer 24. Accordingly, the first electrochromic region and the second electrochromic region are controlled to perform color changing by applying a voltage between the first lead-out electrode 31 and the second lead-out electrode 32. That is, the path of the voltage is from the second conductive layer 14 to the first conductive layer 12, then to the third conductive layer 22, and finally to the fourth conductive layer 24. The first electrochromic region and the second electrochromic region are connected in series, so the voltage applied between the first lead-out electrode 31 and the second lead-out electrode 32 is divided by the two electrochromic regions together. That is, a divided voltage is applied to each electrochromic region respectively to control the two electrochromic regions to perform color changing simultaneously, thereby improving the color changing speed of the entire electrochromic device. Moreover, the arrangement of dividing the large-width electrochromic device into several smaller electrochromic regions reduces the effect of the surface resistance of the conductive layer on a color changing process, thereby improving the color changing uniformity of each electrochromic region.

As shown in FIG. 1, the first conductive layer 12 and the third conductive layer 22 may be bonded through a conductive medium. The conductive medium may be, for example, a conductive adhesive or a conductive silver paste, and so on. The conductive adhesive may further include one or more of a conductive adhesive, a conductive acrylic acid, a conductive silver adhesive, and the like. Alternatively, as shown in FIG. 2, the first conductive layer 12 and the third conductive layer 22 may be an integrally connected structure. Correspondingly, the first base layer 11 and the third base layer 21 may also be an integrally connected structure. Alternatively, as shown in FIG. 3, the second base layer 15 and the fourth base layer 25 may also be an integrally connected structure as long as the insulation between the edge of the first electrochromic layer 13 and the edge of the second electrochromic layer 23 and the non-contact between the second conductive layer 14 and the fourth conductive layer 24 are guaranteed.

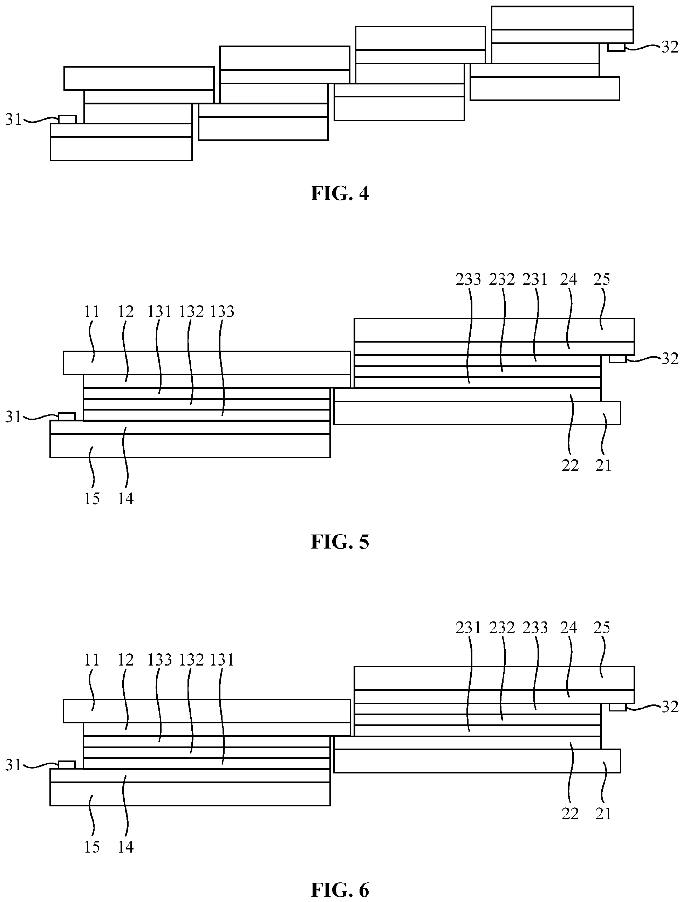

When the electrochromic device includes three or more electrochromic regions, the structure of the electrochromic device may be shown in FIG. 4 (FIG. 4 illustrates an example of four electrochromic regions). Two conductive layers of each electrochromic region located inside the electrochromic device are electrically connected to one conductive layer of adjacent electrochromic regions on the two sides of the electrochromic region, respectively. One conductive layer of an electrochromic region located at the periphery is electrically connected to one conductive layer of an adjacent electrochromic region. The electrical connection between each two adjacent electrochromic regions is the same as in the preceding case which includes two electrochromic regions. The other conductive layer of the electrochromic region located at the periphery is configured to be electrically connected to a lead-out electrode. That is, the first lead-out electrode 31 and the second lead-out electrode 32 are electrically connected to the peripheries on two sides of the electrochromic device respectively. In this case, the four electrochromic regions in the electrochromic device are connected in series to divide the voltage applied between the first lead-out electrode 31 and the second lead-out electrode 32.

Optionally, at least two electrochromic regions have the same width. In this case, voltages divided to the at least two electrochromic regions are equal. It is assumed that the overall width of the electrochromic device in this embodiment is the same as the overall width of a traditional electrochromic device. Compared with the traditional electrochromic device, if a voltage having a value of a multiple of the number of electrochromic regions is applied between the first lead-out electrode 31 and the second lead-out electrode 32, a voltage divided to each electrochromic region may be the same as the voltage applied to the traditional electrochromic device. The width of each electrochromic region is greatly reduced compared with the traditional electrochromic device. In this case, on the basis of improving the color changing speed of the entire electrochromic device and the color changing uniformity of each electrochromic region, color changing speeds of multiple electrochromic regions and coloring degrees of multiple electrochromic regions can be synchronized. In the case where multiple electrochromic regions change color in the same direction, the color changing uniformity of the entire electrochromic device is improved.

Optionally, as shown in FIGS. 5 and 6 (FIGS. 5 and 6 illustrate the example in which two electrochromic regions are included). The first electrochromic layer includes a first electrochromic material layer 131, a first ion conduction layer 132, and a first ion storage layer 133 that are stacked in sequence. The second electrochromic layer includes a second electrochromic material layer 231, a second ion conduction layer 232, and a second ion storage layer 233 that are stacked in sequence. The first electrochromic material layer 131 is in proximity to the first conductive layer 12, and the second ion storage layer 233 is in proximity to the third conductive layer 22 (as shown in FIG. 5). Alternatively, the first ion storage layer 133 is in proximity to the first conductive layer 12, and the second electrochromic material layer 231 is in proximity to the third conductive layer 22 (as shown in FIG. 6). In the preceding cases, voltages applied to the two electrochromic regions are in the same direction. In the two electrochromic regions, the positions of two ion storage layers are the same and the positions of two electrochromic material layers are the same. When the voltage is applied between the first lead-out electrode 31 and the second lead-out electrode 32, coloring states of the two electrochromic regions are the same; that is, color changing is implemented in the same direction. The coloring states include a coloration state, an intermediate state, and a decoloration state. The intermediate state is a state in which an open-circuit voltage in an electrochromic region is 0 V. On the basis of the intermediate state, the transmittance decreases to enter the coloration state and increases to enter the decoloration state. In electrochromic devices of other types, the coloring states include only the coloration state or the decoloration state. The coloration state or the decoloration state is a state in which an open-circuit voltage in an electrochromic region is 0 V. The coloration state of the electrochromic region and the decoloration state of the electrochromic region may each include a range; that is, multiple coloring levels are divided according to the magnitude of the transmittance. Different coloring levels correspond to different coloring degrees of the electrochromic region. In this case, the two electrochromic regions in FIGS. 5 and 6 may have the same coloring degree or different coloring degrees, which may be implemented by configuring the width relationship of the two electrochromic regions. For example, when the widths of the two electrochromic regions are the same, the two electrochromic regions have the same coloring state and the same coloring degree, thereby making the color changing effect of the entire electrochromic device better. When the two electrochromic regions have different widths, the coloring degree of the wider region may be lower than the coloring degree of the narrower region. In this case, the effect of gradation in the same direction can be implemented, thereby satisfying requirements in some specific situations.

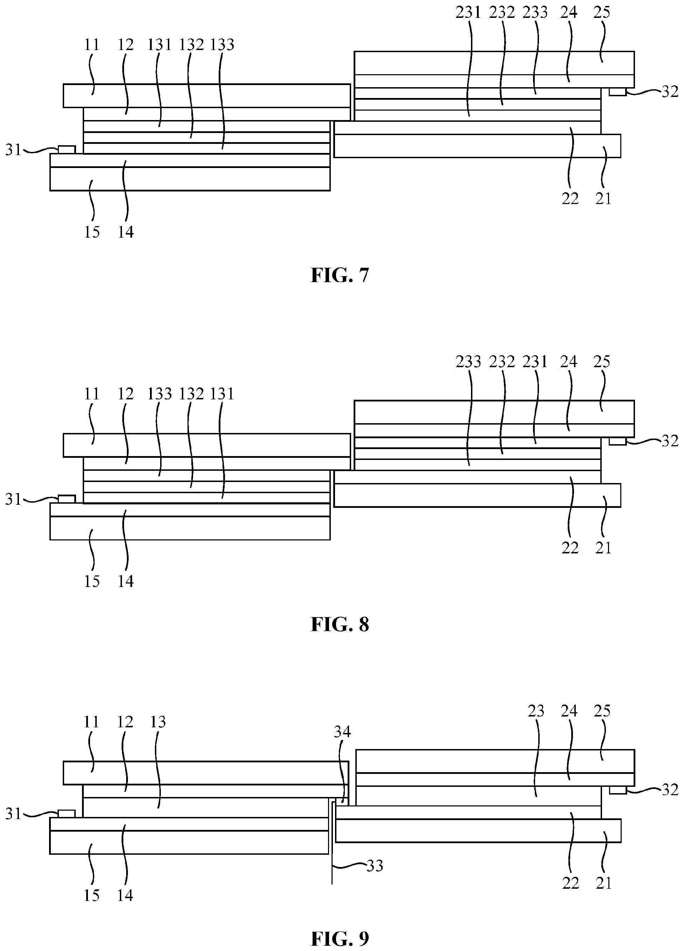

Alternatively, as shown in FIGS. 7 and 8 (FIGS. 7 and 8 illustrate the example in which two electrochromic regions are included). The first electrochromic layer includes a first electrochromic material layer 131, a first ion conduction layer 132, and a first ion storage layer 133 that are stacked in sequence. The second electrochromic layer includes a second electrochromic material layer 231, a second ion conduction layer 232, and a second ion storage layer 233 that are stacked in sequence. The first electrochromic material layer 131 is in proximity to the first conductive layer 12, and the second electrochromic material layer 231 is in proximity to the third conductive layer 22 (as shown in FIG. 7). Alternatively, the first ion storage layer 133 is in proximity to the first conductive layer 12, and the second ion storage layer 233 is in proximity to the third conductive layer 22 (as shown in FIG. 8). In the preceding cases, voltages applied to the two electrochromic regions are in the opposite directions. In the two electrochromic regions, the two ion storage layers are in opposite positions and the two electrochromic material layers are opposite positions. When the voltage is applied between the first lead-out electrode 31 and the second lead-out electrode 32, coloring states of the two electrochromic regions are opposite (for example, the coloring state of one electrochromic region is the coloration state, while the coloring state of the other electrochromic region is the decoloration state); that is, color changing is implemented in different directions. Moreover, the two electrochromic regions have different coloring degrees. However, when the two electrochromic regions have the same width, the two electrochromic regions may have complementary coloring degrees. That is, the coloring degrees of the two electrochromic regions have the same level number from the intermediate state (for example, one electrochromic region is in an N^{th} coloring level of the coloration state, and the other electrochromic region is in an N^{th} coloring level of the decoloration state). When the two electrochromic regions change color in different directions, the effect of gradation in different directions can be implemented by configuring the width relationship of the two electrochromic regions, thereby satisfying requirements under more scenarios.

For the electrochromic device according to the embodiments of the present application, the electrochromic device is divided into at least two electrochromic regions, and the at least two electrochromic regions are configured to be sequentially connected in series. Then a first lead-out electrode and a second lead-out electrode are electrically connected to the electrochromic regions at the peripheries on two sides of the electrochromic device. In this case, multiple electrochromic regions are controlled through the first lead-out electrode and the second lead-out electrode to change color simultaneously, thereby improving the color changing speed of the entire large-width electrochromic device and the color changing uniformity of the multiple electrochromic regions.

FIG. 9 is a structural diagram of another electrochromic device according to an embodiment of the present application. The technical scheme of this embodiment is described on the basis of the technical solution of the preceding embodiment. Alternatively, as shown in FIG. 9, a third lead-out electrode 33 is electrically connected to an electrical connection between the first conductive layer 12 and the third conductive layer 22 (FIG. 9 illustrates the example in which two electrochromic regions are included and in which the first electrochromic region and the second electrochromic region are bonded through a conductive medium 34). If the electrochromic device includes three or more electrochromic regions, a third lead-out electrode 33 is electrically connected to the position between each two electrochromic regions, thereby implementing the independent control of each electrochromic region through the third lead-out electrode 33. As shown in FIG. 9, the coloring state and the coloring degree of the first electrochromic region can be controlled independently by applying a voltage between the first lead-out electrode 31 and the third lead-out electrode 33. The coloring state and the coloring degree of the second electrochromic region can be controlled independently by applying a voltage between the second lead-out electrode 32 and the third lead-out electrode 33.

Alternatively, the electrochromic device also includes a controller. The controller is connected to the first lead-out electrode 31, the second lead-out electrode 32, and at least one third lead-out electrode 33. The controller is configured to control, through the first lead-out electrode 31 and the second lead-out electrode 32, the entire electrochromic device to perform color changing and control, through the first lead-out electrode 31, the second lead-out electrode 32, and the at least one third lead-out electrode 33, each electrochromic region in the electrochromic device to perform color changing. An adjustment manner may be determined according to a transmittance adjustment control signal received by the controller. When it is determined that the entire electrochromic device requires to be adjusted, a required voltage is applied to the entire electrochromic device through the first lead-out electrode 31 and the second lead-out electrode 32. When it is determined that one single electrochromic region in the electrochromic device requires to be adjusted, a required voltage is applied to the single electrochromic region through the first lead-out electrode 31 and a third lead-out electrode 33 that correspond to the single electrochromic region, or through two third lead-out electrodes 33 corresponding to the single electrochromic region, or through the second lead-out electrode 32 and a third lead-out electrode 33 that correspond to the single electrochromic region.

For the electrochromic device according to this embodiment of the present application, a third lead-out electrode is electrically connected to an electrical connection of every two adjacent electrochromic regions in the electrochromic device. In this case, on the basis of improving the color changing speed of the entire large-width electrochromic device, a color changing process of a single electrochromic region is controlled independently, thereby satisfying requirements under more scenarios and facilitating the debugging and maintenance of the electrochromic device.

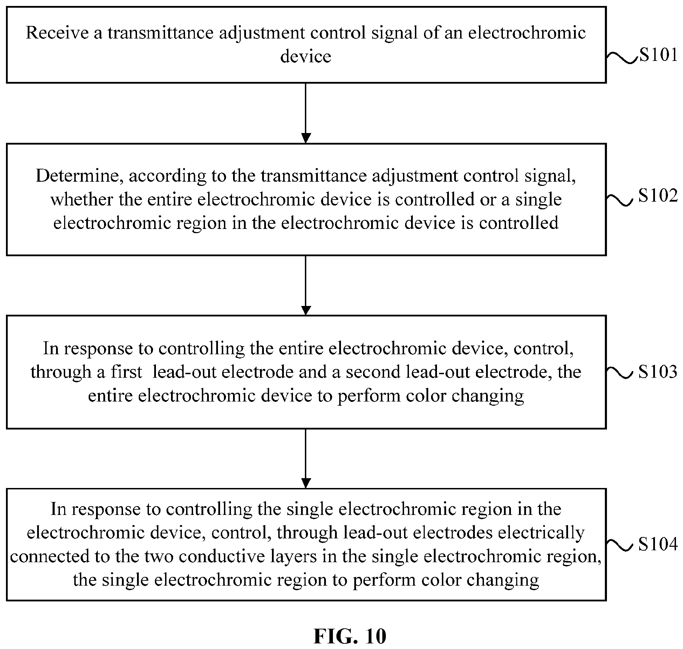

FIG. 10 is a flowchart of a method for controlling an electrochromic device according to an embodiment of the present application. This embodiment is applicable to the preceding case where a color changing process of the electrochromic device including a controller is controlled. The method may be performed by the controller disposed in the electrochromic device. As shown in FIG. 10, the method includes the steps below.

In S101, a transmittance adjustment control signal of the electrochromic device is received.

In S102, it is determined according to the transmittance adjustment control signal whether the entire electrochromic device is controlled or a single electrochromic region in the electrochromic device is controlled.

In S103, in response to controlling the entire electrochromic device, the entire electrochromic device is controlled through a first lead-out electrode and a second lead-out electrode to perform color changing.

In S104, in response to controlling the single electrochromic region in the electrochromic device, the single electrochromic region is controlled through extraction electrodes electrically connected to two conductive layers in the single electrochromic region to perform color changing.

During the use of the electrochromic device, a user may trigger the generation of a transmittance adjustment control signal through an operation according to requirements for the transmittance of the electrochromic device. Exemplarily, an adjustment button is disposed outside the electrochromic device. When the user presses the button, one transmittance adjustment control signal is generated and received by the controller in the electrochromic device. Additionally, the electrochromic device may also generate the transmittance adjustment control signal spontaneously according to the surrounding environment. Exemplarily, the electrochromic device may acquire environment brightness based on a certain period, generate one transmittance adjustment control signal automatically according to the required transmittance corresponding to the environment brightness, and send the transmittance adjustment control signal to the controller for processing. The manner of generating the transmittance adjustment control signal is not limited in this embodiment and not limited to the preceding example.

After the transmittance adjustment control signal for the electrochromic device is received, it may be determined according to the transmittance adjustment control signal whether the entire electrochromic device is adjusted or one single electrochromic region in the electrochromic device is adjusted so that a voltage is applied through different lead-out electrodes for controlling, making the electrochromic device to reach a state corresponding to the transmittance adjustment control signal. When it is determined that the entire electrochromic device requires to be adjusted, a required voltage is applied to the entire electrochromic device through the first lead-out electrode and the second lead-out electrode. When it is determined that one single electrochromic region in the electrochromic device requires to be adjusted, a required voltage is applied to the single electrochromic region through the first lead-out electrode and a third lead-out electrode that correspond to the single electrochromic region, or through two third lead-out electrodes corresponding to the single electrochromic region, or through the second lead-out electrode and a third lead-out electrode that correspond to the single electrochromic region. Additionally, when the electrochromic device includes three or more electrochromic regions, at least two of the electrochromic regions located between two lead-out electrodes spaced apart may also be controlled through the two lead-out electrodes to perform color changing.

On the basis of the preceding technical schemes, optionally, if the entire electrochromic device is controlled, before the entire electrochromic device is controlled through the first lead-out electrode and the second lead-out electrode to perform color changing, the method further includes adjusting at least two electrochromic regions in the electrochromic device to have the same coloring degree or complementary coloring degrees. For the electrochromic device changing color in the same direction, the at least two electrochromic regions in the electrochromic device require to be adjusted to have the same coloring degree. For the electrochromic device changing color in different directions, the at least two electrochromic regions in the electrochromic device require to be adjusted to have the complementary coloring degrees. During the use of the electrochromic device, the case where the coloring degree of one single electrochromic region is adjusted independently may exist, that is, the one single electrochromic region is charged with a certain electric quantity. In this case, if the single electrochromic region is not adjusted to have the same coloring degree or complementary degree with other electrochromic regions, the single electrochromic region will be fully charged first in a process of controlling the entire electrochromic device, thereby limiting a charging process of the other electrochromic regions. After the single electrochromic region is fully charged, if a voltage continues to be applied to the single electrochromic region, the single electrochromic region may be damaged. If the voltage is not continued to be applied to the single electrochromic region, other electrochromic regions may not reach a state corresponding to the transmittance adjustment control signal. Therefore, before the entire electrochromic device is controlled, the at least two electrochromic regions in the electrochromic device may be first adjusted to have the same coloring degree or complementary coloring degrees, thereby guaranteeing the accuracy of a control result. For example, the open-circuit voltage of each electrochromic region may be monitored so that the at least two electrochromic regions of the same coloring degree or complementary coloring degrees can be implemented.

On the basis of the preceding technical schemes, optionally, if the entire electrochromic device is controlled, before the at least two electrochromic regions in the electrochromic device are adjusted to have the same coloring degree or the complementary coloring degrees, the method further includes the following steps: It is determined whether each electrochromic region in the electrochromic device is damaged; and if a target electrochromic region being damaged exists, lead-out electrodes electrically connected to the two conductive layers in the target electrochromic region is shorted. Optionally, determining whether each electrochromic region in the electrochromic device is damaged includes the following: Each electrochromic region in the electrochromic device is controlled to perform color changing, and the current of each electrochromic region in a control process is acquired; and if a current of the target electrochromic region exceeding a preset current threshold exists, it is determined that the target electrochromic region is damaged. The preset current threshold is a current range having an upper current limit and a lower current limit. Before the entire electrochromic device is adjusted, each electrochromic region may be adjusted first to determine whether each electrochromic region is damaged. The current of each electrochromic region is acquired in an adjustment process. If a current exceeds the upper limit of the preset current threshold, it may be determined that a short circuit occurs in the corresponding single electrochromic region. If the current does not reach the lower limit of the preset current threshold, it may be determined that an open circuit occurs in the corresponding single electrochromic region. In these two cases, it is determined that the target electrochromic region is damaged, thus the lead-out electrodes electrically connected to the two conductive layers in the target electrochromic region are shorted to omit the target electrochromic region, thereby better implementing the preceding process in which the at least two electrochromic regions in the electrochromic device are adjusted to have the same coloring degree or complementary coloring degrees.

For the method for controlling an electrochromic device according to the embodiments of the present application, an adjustment manner of the electrochromic device is determined according to a received transmittance adjustment control signal, thereby implementing a process of adjusting the entire electrochromic device and adjusting a single region.

## Claims

1. An electrochromic device, comprising at least two electrochromic regions, wherein each two adjacent electrochromic regions of the at least two electrochromic regions comprises a first electrochromic region and a second electrochromic region, wherein the first electrochromic region comprises a first base layer (11), a first conductive layer (12), a first electrochromic layer (13), a second conductive layer (14), and a second base layer (15) that are stacked in sequence; and the second electrochromic region comprises a third base layer (21), a third conductive layer (22), a second electrochromic layer (23), a fourth conductive layer (24), and a fourth base layer (25) that are stacked in sequence; wherein the first conductive layer (12) is electrically connected to the third conductive layer (22); the second conductive layer (14) is not in contact with the fourth conductive layer (24); and an edge of the first electrochromic layer (13) is insulated from an edge of the second electrochromic layer (23); and
in a case where the first electrochromic region is located at a periphery of the electrochromic device, a first lead-out electrode (31) is electrically connected to the second conductive layer (14); and in a case where the second electrochromic region is located at the periphery of the electrochromic device, a second lead-out electrode (32) is electrically connected to the fourth conductive layer (24), **characterized in that**:
an electronic insulating material is disposed between the edge of the first electrochromic layer (13) and the edge of the second electrochromic layer (23) to insulate the edge of the first electrochromic layer (13) from the edge of the second electrochromic layer (23).

2. The electrochromic device according to claim 1, wherein the first electrochromic layer (13) comprises a first electrochromic material layer (131), a first ion conduction layer (132), and a first ion storage layer (133) that are stacked in sequence; and the second electrochromic layer (23) comprises a second electrochromic material layer (231), a second ion conduction layer (232), and a second ion storage layer (233) that are stacked in sequence;
wherein the first electrochromic material layer (131) is in proximity to the first conductive layer (12), and the second ion storage layer (233) is in proximity to the third conductive layer (22); or the first ion storage layer (133) is in proximity to the first conductive layer (12), and the second electrochromic material layer (231) is in proximity to the third conductive layer (22).

3. The electrochromic device according to claim 1, wherein the first electrochromic layer (13) comprises a first electrochromic material layer (131), a first ion conduction layer (132), and a first ion storage layer (133) that are stacked in sequence; and the second electrochromic layer (23) comprises a second electrochromic material layer (231), a second ion conduction layer (232), and a second ion storage layer (233) that are stacked in sequence;
wherein the first electrochromic material layer (131) is in proximity to the first conductive layer (12), and the second electrochromic material layer (231) is in proximity to the third conductive layer (22); or the first ion storage layer (133) is in proximity to the first conductive layer (12), and the second ion storage layer (233) is in proximity to the third conductive layer (22).

4. The electrochromic device according to claim 1, wherein the at least two electrochromic regions have a same width.

5. The electrochromic device according to any one of claims 1 to 4, wherein a third lead-out electrode (33) is electrically connected to an electrical connection between the first conductive layer (12) and the third conductive layer (22).

6. The electrochromic device according to claim 5, further comprising a controller, wherein the controller is connected to the first lead-out electrode (31), the second lead-out electrode (32), and at least one of the third lead-out electrode (33); and the controller is configured to control, through the first lead-out electrode (31) and the second lead-out electrode (32), the electrochromic device to perform color changing and control, through the first lead-out electrode (31), the second lead-out electrode (32), and the at least one third lead-out electrode (33), each electrochromic region in the electrochromic device to perform color changing.

7. The electrochromic device according to claim 1, wherein the electronic insulating material comprises an insulating colloid or an ionic conduction layer material.

8. The electrochromic device according to claim 1, wherein the at least two electrochromic regions have different widths.

9. A method for controlling an electrochromic device, applied to the electrochromic device according to claim 6, comprising:
receiving (S101) a transmittance adjustment control signal of the electrochromic device;
determining (S102), according to the transmittance adjustment control signal, whether the entire electrochromic device is controlled or a single electrochromic region in the electrochromic device is controlled;
in response to controlling the entire electrochromic device, controlling (S103), through the first lead-out electrode of the electrochromic device and the second lead-out electrode of the electrochromic device, the entire electrochromic device to perform color changing; and
in response to controlling the single electrochromic region in the electrochromic device, controlling (S104), through lead-out electrodes electrically connected to two conductive layers in the single electrochromic region, the single electrochromic region to perform color changing.

10. The method according to claim 9, wherein in a case where the entire electrochromic device is controlled, before the entire electrochromic device is controlled through the first lead-out electrode of the electrochromic device and the second lead-out electrode of the electrochromic device to perform color changing, the method further comprises:
adjusting the at least two electrochromic regions in the electrochromic device to have a same coloring degree or complementary coloring degrees.

11. The method according to claim 10, wherein in the case where the entire electrochromic device is controlled, before adjusting the at least two electrochromic regions in the electrochromic device to have the same coloring degree or the complementary coloring degrees, the method further comprises:
testing whether each electrochromic region in the electrochromic device is damaged; and
in response to presence of a target electrochromic region being damaged, shorting lead-out electrodes electrically connected to two conductive layers in the target electrochromic region.

12. The method according to claim 11, wherein the testing whether each electrochromic region in the electrochromic device is damaged comprises:
controlling each electrochromic region in the electrochromic to perform color changing and acquiring a current of each electrochromic region in a control process; and
in a case of presence of a current of the target electrochromic region exceeding a preset current threshold, determining that the target electrochromic region is damaged.

13. The method according to claim 9, wherein the controlling (S104), through the lead-out electrodes electrically connected to the two conductive layers in the single electrochromic region, the single electrochromic region to perform color changing comprises one of the following:
applying a required voltage to the single electrochromic region through the first lead-out electrode and a third lead-out electrode (33) that correspond to the single electrochromic region;
applying a required voltage to the single electrochromic region through two third lead-out electrodes (33) corresponding to the single electrochromic region; or
applying a required voltage to the single electrochromic region through the second lead-out electrode and a third lead-out electrode (33) that correspond to the single electrochromic region.

14. The method according to claim 9, wherein the method further comprises: when the electrochromic device comprises at least three electrochromic regions,
controlling, through two spaced apart lead-out electrodes, at least two electrochromic regions of the at least three electrochromic regions located between the two spaced apart lead-out electrodes to perform color changing.

## Patentansprüche

1. Elektrochrome Vorrichtung, umfassend mindestens zwei elektrochrome Bereiche, wobei je zwei benachbarte elektrochrome Bereiche der mindestens zwei elektrochromen Bereiche einen ersten elektrochromen Bereich und einen zweiten elektrochromen Bereich umfassen, wobei der erste elektrochrome Bereich eine erste Basisschicht (11), eine erste leitfähige Schicht (12), eine erste elektrochrome Schicht (13), eine zweite leitfähige Schicht (14) und eine zweite Basisschicht (15) umfasst, die nacheinander gestapelt sind, und der zweite elektrochrome Bereich eine dritte Basisschicht (21), eine dritte leitfähige Schicht (22), eine zweite elektrochrome Schicht (23), eine vierte leitfähige Schicht (24) und eine vierte Basisschicht (25) umfasst, die nacheinander gestapelt sind, wobei die erste leitfähige Schicht (12) elektrisch mit der dritten leitfähigen Schicht (22) verbunden ist, die zweite leitfähige Schicht (14) die vierte leitfähige Schicht (24) nicht berührt und ein Rand der ersten elektrochromen Schicht (13) von einem Rand der zweiten elektrochromen Schicht (23) isoliert ist, und wobei
eine erste Herausleitungselektrode (31) elektrisch mit der zweiten leitfähigen Schicht (14) verbunden ist, wenn sich der erste elektrochrome Bereich an einem Umfang der elektrochromen Vorrichtung befindet, und eine zweite Herausleitungselektrode (32) elektrisch mit der vierten leitfähigen Schicht (24) verbunden ist, wenn sich der zweite elektrochrome Bereich am Umfang der elektrochromen Vorrichtung befindet, **dadurch gekennzeichnet, dass**:
ein elektronenisolierendes Material zwischen dem Rand der ersten elektrochromen Schicht (13) und dem Rand der zweiten elektrochromen Schicht (23) angeordnet ist, um den Rand der ersten elektrochromen Schicht (13) von dem Rand der zweiten elektrochromen Schicht (23) zu isolieren.

2. Elektrochrome Vorrichtung nach Anspruch 1, wobei die erste elektrochrome Schicht (13) eine erste elektrochrome Materialschicht (131), eine erste Ionenleitschicht (132) und eine erste Ionenspeicherschicht (133) umfasst, die nacheinander gestapelt sind, und die zweite elektrochrome Schicht (23) eine zweite elektrochrome Materialschicht (231), eine zweite Ionenleitschicht (232) und eine zweite Ionenspeicherschicht (233) umfasst, die nacheinander gestapelt sind,
wobei die erste elektrochrome Materialschicht (131) in der Nähe der ersten leitfähigen Schicht (12) ist und die zweite Ionenspeicherschicht (233) in der Nähe der dritten leitfähigen Schicht (22) ist oder die erste Ionenspeicherschicht (133) in der Nähe der ersten leitfähigen Schicht (12) ist und die zweite elektrochrome Materialschicht (231) in der Nähe der dritten leitfähigen Schicht (22) ist.

3. Elektrochrome Vorrichtung nach Anspruch 1, wobei die erste elektrochrome Schicht (13) eine erste elektrochrome Materialschicht (131), eine erste Ionenleitschicht (132) und eine erste Ionenspeicherschicht (133) umfasst, die nacheinander gestapelt sind, und die zweite elektrochrome Schicht (23) eine zweite elektrochrome Materialschicht (231), eine zweite Ionenleitschicht (232) und eine zweite Ionenspeicherschicht (233) umfasst, die nacheinander gestapelt sind,
wobei die erste elektrochrome Materialschicht (131) in der Nähe der ersten leitfähigen Schicht (12) ist und die zweite elektrochrome Materialschicht (231) in der Nähe der dritten leitfähigen Schicht (22) ist oder die erste Ionenspeicherschicht (133) in der Nähe der ersten leitfähigen Schicht (12) ist und die zweite Ionenspeicherschicht (233) in der Nähe der dritten leitfähigen Schicht (22) ist.

4. Elektrochrome Vorrichtung nach Anspruch 1, wobei die mindestens zwei elektrochromen Bereiche dieselbe Breite aufweisen.

5. Elektrochrome Vorrichtung nach einem der Ansprüche 1 bis 4, wobei eine dritte Herausleitungselektrode (33) elektrisch mit einer elektrischen Verbindung zwischen der ersten leitfähigen Schicht (12) und der dritten leitfähigen Schicht (22) verbunden ist.

6. Elektrochrome Vorrichtung nach Anspruch 5, ferner umfassend eine Steuerung, wobei die Steuerung mit der ersten Herausleitungselektrode (31), der zweiten Herausleitungselektrode (32) und mindestens einer dritten Herausleitungselektrode (33) verbunden ist und die Steuerung ausgelegt ist, um die elektrochrome Vorrichtung über die erste Herausleitungselektrode (31) und die zweite Herausleitungselektrode (32) so zu steuern, dass eine Farbveränderung durchgeführt wird, und jeden elektrochromen Bereich in der elektrochromen Vorrichtung über die erste Herausleitungselektrode (31), die zweite Herausleitungselektrode (32) und die mindestens eine dritte Herausleitungselektrode (33) so zu steuern, dass eine Farbveränderung durchgeführt wird.

7. Elektrochrome Vorrichtung nach Anspruch 1, wobei das elektronenisolierende Material ein Isolierkolloid oder ein Ionenleitschichtmaterial umfasst.

8. Elektrochrome Vorrichtung nach Anspruch 1, wobei die mindestens zwei elektrochromen Bereiche unterschiedliche Breiten aufweisen.

9. Verfahren zur Steuerung einer elektrochromen Vorrichtung, angewandt auf die elektrochrome Vorrichtung nach Anspruch 6, umfassend:
Empfangen (S101) eines Transmissionsgradeinstellungssteuersignals der elektrochromen Vorrichtung;
Bestimmen (S102) gemäß dem Transmissionsgradeinstellungssteuersignal, ob die gesamte elektrochrome Vorrichtung gesteuert wird oder ein einzelner elektrochromer Bereich in der elektrochromen Vorrichtung gesteuert wird;
als Reaktion darauf, dass die gesamte elektrochrome Vorrichtung gesteuert wird, Steuern (S103) der gesamten elektrochromen Vorrichtung über die erste Herausleitungselektrode der elektrochromen Vorrichtung und die zweite Herausleitungselektrode der elektrochromen Vorrichtung, sodass eine Farbänderung durchgeführt wird, und
als Reaktion darauf, dass der einzelne elektrochrome Bereich in der elektrochromen Vorrichtung gesteuert wird, Steuern (S104) des einzelnen elektrochromen Bereichs über die elektrisch mit zwei leitfähigen Schichten in dem einzelnen elektrochromen Bereich verbundenen Herausleitungselektroden, sodass eine Farbveränderung durchgeführt wird.

10. Verfahren nach Anspruch 9, wobei das Verfahren, wenn die gesamte elektrochrome Vorrichtung gesteuert wird, bevor die gesamte elektrochrome Vorrichtung über die erste Herausleitungselektrode der elektrochromen Vorrichtung und die zweite Herausleitungselektrode der elektrochromen Vorrichtung gesteuert wird, um eine Farbveränderung durchzuführen, ferner Folgendes umfasst:
Einstellen der mindestens zwei elektrochromen Bereiche in der elektrochromen Vorrichtung, sodass diese denselben Färbungsgrad oder einander ergänzende Färbungsgrade aufweisen.

11. Verfahren nach Anspruch 10, wobei das Verfahren, wenn die gesamte elektrochrome Vorrichtung gesteuert wird, vor dem Einstellen der mindestens zwei elektrochromen Bereiche in der elektrochromen Vorrichtung, sodass diese denselben Färbungsgrad oder einander ergänzende Färbungsgrade aufweisen, ferner Folgendes umfasst:
Prüfen, für jeden elektrochromen Bereich in der elektrochromen Vorrichtung, ob der elektrochrome Bereich beschädigt ist, und
als Reaktion auf das Vorhandensein eines beschädigten elektrochromen Zielbereichs Kurzschließen von elektrisch mit den beiden leitfähigen Schichten in dem elektrochromen Zielbereich verbundenen Herausleitungselektroden.

12. Verfahren nach Anspruch 11, wobei das Prüfen, für jeden elektrochromen Bereich in der elektrochromen Vorrichtung, ob der elektrochrome Bereich beschädigt ist, Folgendes umfasst:
Steuern jedes elektrochromen Bereichs in der elektrochromen Vorrichtung, sodass eine Farbveränderung durchgeführt wird, und Erfassen eines Stroms jedes elektrochromen Bereichs in einem Steuerprozess und
bei Vorhandensein eines Stroms des elektrochromen Zielbereichs, der einen vorgegebenen Stromschwellenwert überschreitet, Bestimmen, dass der elektrochrome Zielbereich beschädigt ist.

13. Verfahren nach Anspruch 9, wobei das Steuern (S104) des einzelnen elektrochromen Bereichs über die elektrisch mit den zwei leitfähigen Schichten in dem einzelnen elektrochromen Bereich verbundenen Herausleitungselektroden, sodass eine Farbveränderung durchgeführt wird, einen der folgenden Schritte umfasst:
Beaufschlagen des einzelnen elektrochromen Bereichs mit einer erforderlichen Spannung über die erste Herausleitungselektrode und eine dritte Herausleitungselektrode (33), die dem einzelnen elektrochromen Bereich entsprechen;
Beaufschlagen des einzelnen elektrochromen Bereichs mit einer erforderlichen Spannung über zwei dritte Herausleitungselektroden (33), die dem einzelnen elektrochromen Bereich entsprechen, oder
Beaufschlagen des einzelnen elektrochromen Bereichs mit einer erforderlichen Spannung über die zweite Herausleitungselektrode und eine dritte Herausleitungselektrode (33), die dem einzelnen elektrochromen Bereich entsprechen.

14. Verfahren nach Anspruch 9, wobei das Verfahren ferner Folgendes umfasst: wenn die elektrochrome Vorrichtung mindestens drei elektrochrome Bereiche umfasst,
Steuern mindestens zweier elektrochromer Bereiche der mindestens drei elektrochromen Bereiche, die sich zwischen zwei beabstandeten Herausleitungselektroden befinden, über die beiden beabstandeten Herausleitungselektroden, sodass eine Farbveränderung durchgeführt wird.

## Revendications

1. Dispositif électrochromique, comprenant au moins deux régions électrochromiques, dans lequel chaque deux régions électrochromiques adjacentes parmi les au moins deux régions électrochromiques comprend une première région électrochromique et une deuxième région électrochromique, dans lequel la première région électrochromique comprend une première couche de base (11), une première couche conductrice (12), une première couche électrochromique (13), une deuxième couche conductrice (14) et une deuxième couche de base (15) qui sont empilées en séquence ; et la deuxième région électrochromique comprend une troisième couche de base (21), une troisième couche conductrice (22), une deuxième couche électrochromique (23), une quatrième couche conductrice (24) et une quatrième couche de base (25) qui sont empilées en séquence ; dans lequel la première couche conductrice (12) est connectée électriquement à la troisième couche conductrice (22) ; la deuxième couche conductrice (14) n'est pas en contact avec la quatrième couche conductrice (24) ; et un bord de la première couche électrochromique (13) est isolé par rapport à un bord de la deuxième couche électrochromique (23) ; et
dans un cas où la première région électrochromique est située au niveau d'une périphérie du dispositif électrochromique, une première électrode de sortie (31) est connectée électriquement à la deuxième couche conductrice (14) ; et dans un cas où la deuxième région électrochromique est située au niveau de la périphérie du dispositif électrochromique, une deuxième électrode de sortie (32) est connectée électriquement à la quatrième couche conductrice (24), **caractérisé en ce que** :
un matériau d'isolation électronique est disposé entre le bord de la première couche électrochromique (13) et le bord de la deuxième couche électrochromique (23) pour isoler le bord de la première couche électrochromique (13) par rapport au bord de la deuxième couche électrochromique (23).

2. Dispositif électrochromique selon la revendication 1, dans lequel la première couche électrochromique (13) comprend une première couche de matériau électrochromique (131), une première couche de conduction ionique (132) et une première couche de stockage d'ions (133) qui sont empilées en séquence ; et la deuxième couche électrochromique (23) comprend une deuxième couche de matériau électrochromique (231), une deuxième couche de conduction ionique (232) et une deuxième couche de stockage d'ions (233) qui sont empilées en séquence ;
dans lequel la première couche de matériau électrochromique (131) est à proximité de la première couche conductrice (12), et la deuxième couche de stockage d'ions (233) est à proximité de la troisième couche conductrice (22) ; ou la première couche de stockage d'ions (133) est à proximité de la première couche conductrice (12), et la deuxième couche de matériau électrochromique (231) est à proximité de la troisième couche conductrice (22).

3. Dispositif électrochromique selon la revendication 1, dans lequel la première couche électrochromique (13) comprend une première couche de matériau électrochromique (131), une première couche de conduction ionique (132) et une première couche de stockage d'ions (133) qui sont empilées en séquence ; et la deuxième couche électrochromique (23) comprend une deuxième couche de matériau électrochromique (231), une deuxième couche de conduction ionique (232) et une deuxième couche de stockage d'ions (233) qui sont empilées en séquence ;
dans lequel la première couche de matériau électrochromique (131) est à proximité de la première couche conductrice (12), et la deuxième couche de matériau électrochromique (231) est à proximité de la troisième couche conductrice (22) ; ou la première couche de stockage d'ions (133) est à proximité de la première couche conductrice (12), et la deuxième couche de stockage d'ions (233) est à proximité de la troisième couche conductrice (22).

4. Dispositif électrochromique selon la revendication 1, dans lequel les au moins deux régions électrochromiques présentent une même largeur.

5. Dispositif électrochromique selon l'une quelconque des revendications 1 à 4, dans lequel une troisième électrode de sortie (33) est connectée électriquement à une connexion électrique entre la première couche conductrice (12) et la troisième couche conductrice (22).

6. Dispositif électrochromique selon la revendication 5, comprenant en outre une unité de commande, dans lequel l'unité de commande est connectée à la première électrode de sortie (31), à la deuxième électrode de sortie (32) et à au moins l'une parmi la troisième électrode de sortie (33) ; et l'unité de commande est configurée pour commander, à travers la première électrode de sortie (31) et de la deuxième électrode de sortie (32), le dispositif électrochromique pour effectuer un changement de couleur et commander, à travers la première électrode de sortie (31), la deuxième électrode de sortie (32), et l'au moins une troisième électrode de sortie (33), chaque région électrochromique dans le dispositif électrochromique pour effectuer un changement de couleur.

7. Dispositif électrochromique selon la revendication 1, dans lequel le matériau d'isolation électronique comprend un colloïde isolant ou un matériau de couche de conduction ionique.

8. Dispositif électrochromique selon la revendication 1, dans lequel les au moins deux régions électrochromiques présentent des largeurs différentes.

9. Procédé de commande d'un dispositif électrochromique, appliqué au dispositif électrochromique selon la revendication 6, comprenant :
la réception (S101) d'un signal de commande d'ajustement de transmittance du dispositif électrochromique ;
la détermination (S102), en fonction du signal de commande d'ajustement de transmittance, si le dispositif électrochromique en entier est commandé ou si une seule région électrochromique dans le dispositif électrochromique est commandée ;
en réponse à la commande du dispositif électrochromique en entier, la commande (S103), à travers la première électrode de sortie du dispositif électrochromique et la deuxième électrode de sortie du dispositif électrochromique, du dispositif électrochromique en entier pour effectuer un changement de couleur ; et
en réponse à la commande d'une seule région électrochromique dans le dispositif électrochromique, la commande (S104), à travers des électrodes de sortie connectées électriquement à deux couches conductrices dans la seule région électrochromique, de la seule région électrochromique pour effectuer un changement de couleur.

10. Procédé selon la revendication 9, dans lequel dans un cas où le dispositif électrochromique en entier est commandé, avant que le dispositif électrochromique en entier soit commandé à travers la première électrode de sortie du dispositif électrochromique et la deuxième électrode de sortie du dispositif électrochromique pour effectuer un changement de couleur, le procédé comprend en outre :
l'ajustement des au moins deux régions électrochromiques dans le dispositif électrochromique pour présenter un même degré de coloration ou des degrés de coloration complémentaires.

11. Procédé selon la revendication 10, dans lequel dans le cas où le dispositif électrochromique en entier est commandé, avant l'ajustement des au moins deux régions électrochromiques dans le dispositif électrochromique pour présenter le même degré de coloration ou les degrés de coloration complémentaires, le procédé comprend en outre :
le test de chaque région électrochromique dans le dispositif électrochromique pour déterminer si la région électrochromique est endommagée ; et
en réponse à la présence d'une région électrochromique cible endommagée, le court-circuitage d'électrodes de sortie connectées électriquement à deux couches conductrices dans la région électrochromique cible.

12. Procédé selon la revendication 11, dans lequel le test de chaque région électrochromique dans le dispositif électrochromique pour déterminer si la région électrochromique est endommagée comprend :
la commande de chaque région électrochromique du dispositif électrochromique afin qu'elle effectue un changement de couleur et l'acquisition du courant de chaque région électrochromique au cours d'un processus de commande ; et
en cas de présence d'un courant de la région électrochromique cible dépassant un courant seuil prédéfini, la détermination que la région électrochromique cible est endommagée.

13. Procédé de commande selon la revendication 9, dans lequel la commande (S104), à travers les électrodes de sortie connectées électriquement aux deux couches conductrices dans la seule région électrochromique, de la seule région électrochromique à effectuer un changement de couleur comprend l'une parmi ce qui suit :
l'application d'une tension requise à la seule région électrochromique à travers la première électrode de sortie et une troisième électrode de sortie (33) qui correspondent à la seule région électrochromique ;
l'application d'une tension requise à la seule région électrochromique à travers deux troisièmes électrodes de sortie (33) correspondant à la seule région électrochromique ; ou
l'application d'une tension requise à la seule région électrochromique à travers la deuxième électrode de sortie et une troisième électrode de sortie (33) qui correspondent à la seule région électrochromique.

14. Procédé selon la revendication 9, dans lequel le procédé comprend en outre : lorsque le dispositif électrochromique comprend au moins trois régions électrochromiques,
la commande, à travers deux électrodes de sortie espacées l'une de l'autre, d'au moins deux régions électrochromiques parmi les au moins trois régions électrochromiques situées entre les deux électrodes de sortie espacées l'une de l'autre à effectuer un changement de couleur.
